# EUROPEAN PATENT SPECIFICATION

(11) **EP 1 969 421 B1**
(45) Date of publication and mention of the grant of the patent: **09.01.2013**
(21) Application number: 06804751.3
(22) Date of filing: 20.11.2006
(51) Int. Cl.: A45C 13/00, G03B 17/00, A45C 11/38, G03B 17/08

(54) **UNDERWATER CAMERA COMBINATION**
UNTERWASSER-KAMERAKOMBINATION
ENSEMBLE APPAREIL PHOTOGRAPHIQUE SOUS-MARIN

(30) Priority: 21.11.2005 US 282767
(43) Date of publication of application: 17.09.2008
(73) Proprietor: Ho, Kenneth Kam-Sing, Richmond, British Columbia V6V 1Y6 (CA)
(72) Inventor: Ho, Kenneth Kam-Sing, Richmond, British Columbia V6V 1Y6 (CA)
(74) Representative: Dr. Weitzel & Partner
(86) International application number: PCT/CA2006/001892
(87) International publication number: WO 2007/056864

(56) References cited:
- WO-A2-2005/073797
- GB-A- 821 235
- JP-A- 7 007 277
- JP-A- 07 007 277
- JP-A- 2000 047 313
- JP-A- 2005 191 824
- US-A- 5 159 366
- US-A- 5 848 299
- US-A1- 2005 117 897

## Description

### FIELD OF THE INVENTION

This invention relates to cameras for underwater use.

### BACKGROUND OF THE INVENTION

This invention addresses some of the problems with diving with conventional digital cameras. Such problems relate to water and pressure.
Examples of conventional waterproof cameras combinations are disclosed in JP 07 007277A, US 5 519 366 A, GB 821 235 A and JP 2005 191824A.

### SUMMARY OF THE INVENTION

There is provided a waterproof camera combination according to the independent claims.

### BRIEF DESCRIPTION OF THE DRAWINGS

All Figures herein are drawn for ease of explanation of the basic teachings of the present invention only; the extensions of the Figures with respect to number, position, relationship, and dimensions of the parts to form the preferred embodiment are explained or are within the skill of the art after the following teachings of the present invention have been read and understood. Further, the exact dimensions and dimensional proportions to conform to specific pressure, force, weight, strength, and similar requirements will likewise be within the skill of the art after the following teachings of the present invention have been read and understood. A better understanding of the present invention can be obtained when the following detailed description of the preferred embodiment is considered in conjunction with the following Figures, in which:

FIG. 1 is a front perspective view of a digital camera and a skin therefor according to this invention.

FIG. 2 is a back perspective view of the skin of FIG. 1.

FIG. 3 is a back perspective view of the skin with the back plate removed.

FIG. 4 is a back perspective view with a camera to be inserted into the skin.

FIG. 5 is a perspective view of the camera partially inserted into the skin.

FIG. 6 is another perspective view of the camera partially inserted into the skin.

FIG. 7 is a back perspective view of the skin-encased camera about to be inserted into its housing.

FIG. 8 is a back perspective view of the skin-encased camera inserted into the front portion of its housing.

FIG. 9 is three views of a spacer and dial actuator fitted within the skin.

FIG. 10 is three views of a spacer and slide actuator fitted within the skin.

FIG. 11 is a dis-assembled perspective view of the lens protector.

FIG. 12 is the assembled view of the lens protector of FIG. 11.

FIG. 13 is the front perspective view of the skin for the camera of FIG. 15.

FIG. 14 is the back perspective view of the skin for the camera of FIG. 15.

FIG. 15 is a perspective view of the camera associated with the skin and lens protector of FIGS. 11-14.

FIG. 16 is a front and back perspective view of another embodiment of the skin for another camera.

FIG. 17 is a front perspective view of the opened lens protector for the skin-encased camera of FIG. 16.

A portion of the disclosure of this patent document contains material which is subject to copyright protection. The copyright owner has no objection to the facsimile reproduction by anyone of the patent document or the patent disclosure as it appears in the Patent Office file or records, but otherwise reserves all copyright rights whatsoever.

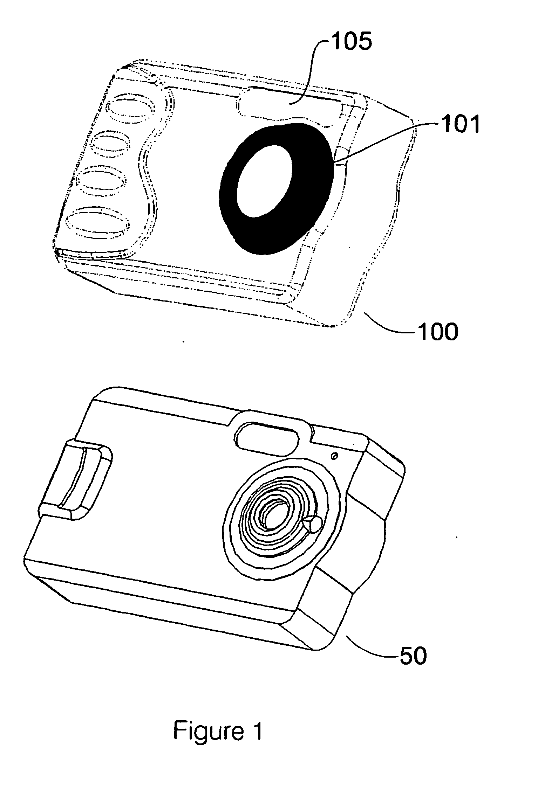

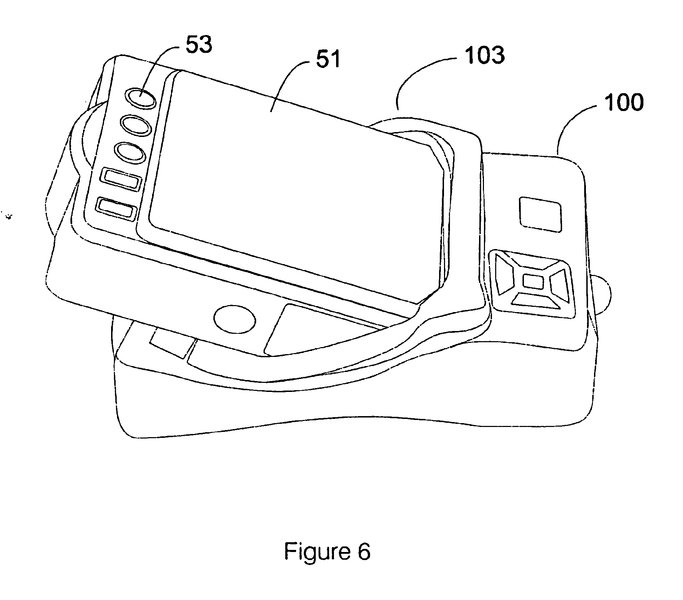

As seen in FIGS. 1 and 4-6, camera 50 is of a conventional digital type with a viewing window 51 (e.g. a LCD screen) for the user, front lens 52, and a plurality of camera function members generally identified as 53 and flash unit 54 (e.g. flash and red-eye reduction LED). Camera function members 53 include buttons to depress (e.g. shutter button, power button, four-way toggle) and members to rotate or slide (e.g. dial switch, jog dial, slider).

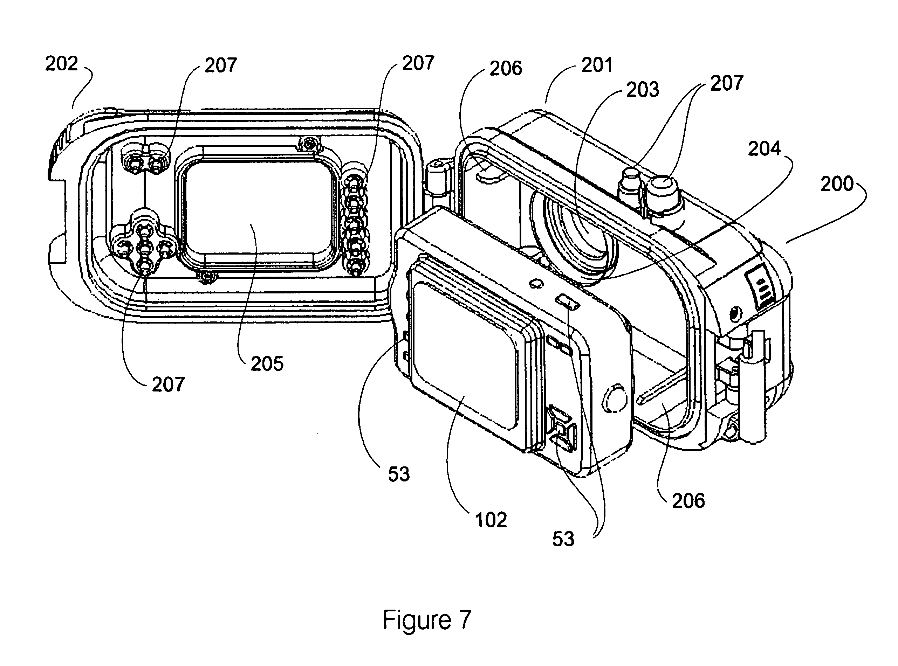

As seen in FIGS. 1-8, skin 100 is molded to provide a snug, form-fitting, "second skin" for encasing digital camera 50. Skin 100 is made of a synthetic, water-proof material (e.g. silicon rubber) and provides to camera 50 waterproofing and protection against sand, dirt, scratches. Skin 100 also provides to camera 50 (by itself or within housing 200, explained below) absorptive cushioning against minor impacts. Camera 50 fitted with skin 100 (as shown in FIGS. 7-8) is considered to be "skin-encased" and will be termed herein as an "encased camera".

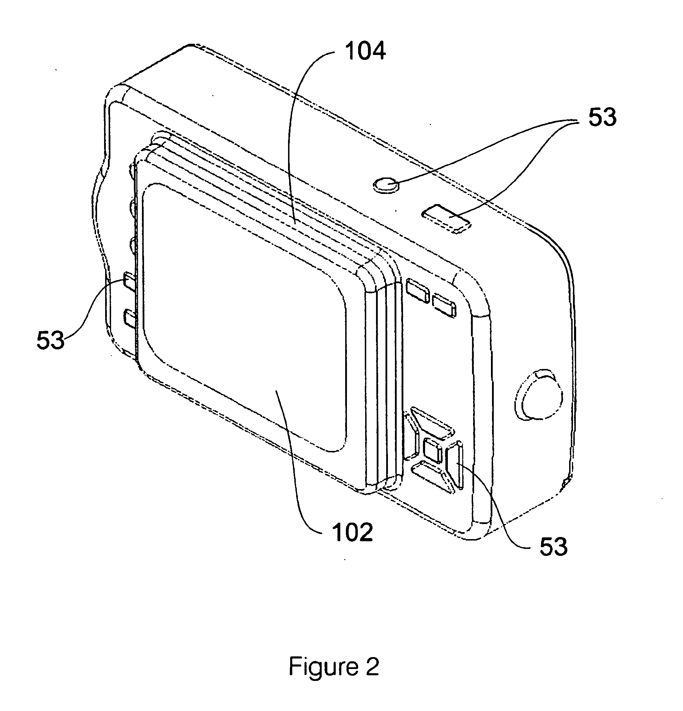

All the contours of camera 50 (e.g. finger grips, front lens 52, plurality of function members 53) are accommodated by skin 100 in a snug fit. Skin 100 is slightly thicker in some places (e.g. contour 104, explained below) and is sufficiently thin elsewhere to permit easy manipulation by the user of all key camera function members 53 by pressing the corresponding portion of skin 100 (and also by manipulation of, for example, spring-loaded buttons in another embodiment of this invention, as described below). Most clearly shown in FIGS. 2-3, portions of skin 100 may be raised slightly to accommodate camera function members which protrude slightly from camera 50.

Skin 100 has semi-rigid or rigid lens port 101 with tempered glass, to accommodate front lens 52 of camera 50 when encased.

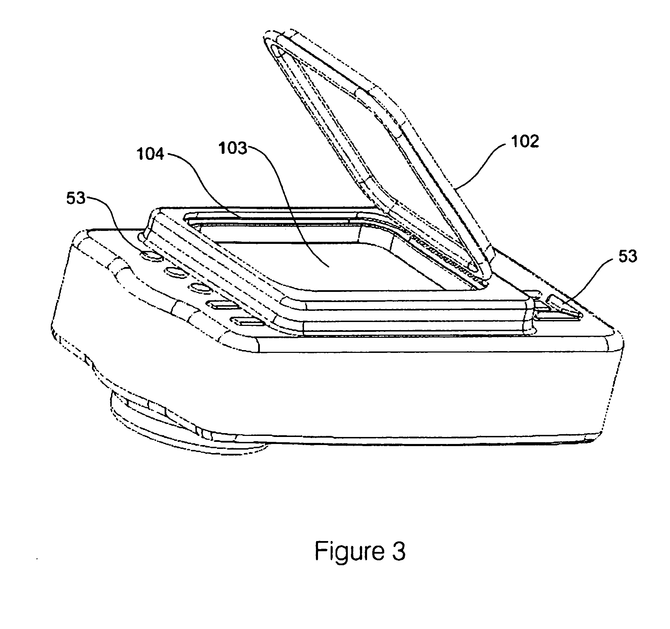

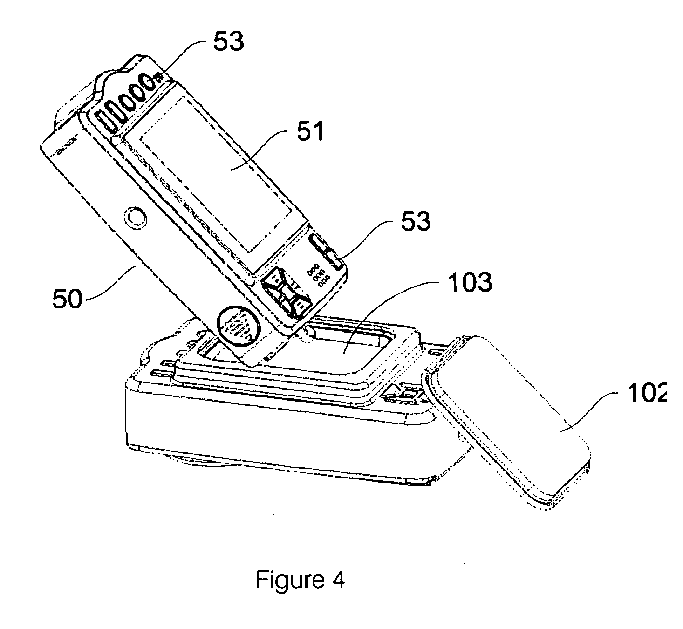

Skin 100 has a clear (e.g. acrylic) plate 102 that is positioned so as to provide the user a clear view of camera viewing window 51 when camera 50 is encased. Skin 100 has a hole 103 defined by a double-lipped, grooved contour 104 (best seen in FIG. 3) that insertably (and also removably) accepts and holds plate 102 into a water-tight friction fit, as seen in FIG. 2. Plate 102 and associated contoured hole 103 are dimensioned at least to permit the user a complete view of camera viewing window 51. Furthermore, plate 102 (and associated hole 103) should be of a size sufficient to permit camera 50 to be inserted therethrough completely so that camera 50 can be snugly fitted completely by skin 100 as a "second skin", much like a diver dons a wetsuit, as seen in FIGS. 4-6). The "second skin" 100 can be removed (i.e. camera 50 is "un-encased") by the reverse process, i.e. removing plate 102 from contoured hole 103, and then removing camera 50 through hole 103.

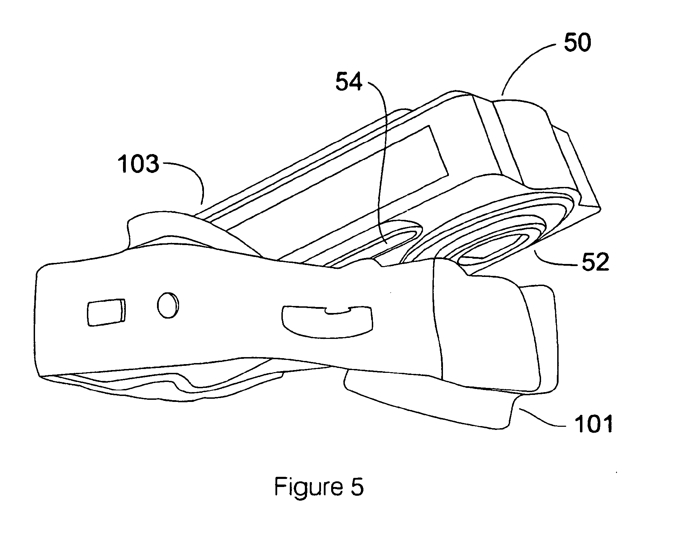

Skin 100 is made conventionally (by injection or compression molding) from conventional materials such as silicon rubber or other synthetic material of like properties. The average thickness of skin 100 is about 1.5 millimeters but as mentioned above, is thicker in some places and thinner in other places. Skin 100 must be flexible enough to permit (through pulling and stretching, as shown in FIGS. 5-6), the insertion of camera 50 into skin 100 through hole 103 and subsequent manual manipulation of camera 50 relative to skin 100 to conclude with the snugly fitting "second skin", as described above.

Skin 100 may be transparent, translucent or coloured as desired (conventionally through the application of pigments in the skin molding process), with two advantageous exceptions. First, as seen in FIG. 1, skin 100 has a clear portion 105 for a flash from camera flash unit 54. Secondly, skin 100 is darkened around lens port 101 (as seen in FIG. 1, and not in other drawings for simplicity of presentation therein) to block the light that would otherwise travel from flash unit 54 through skin 100 and adversely affect the intake of light through camera lens 52.

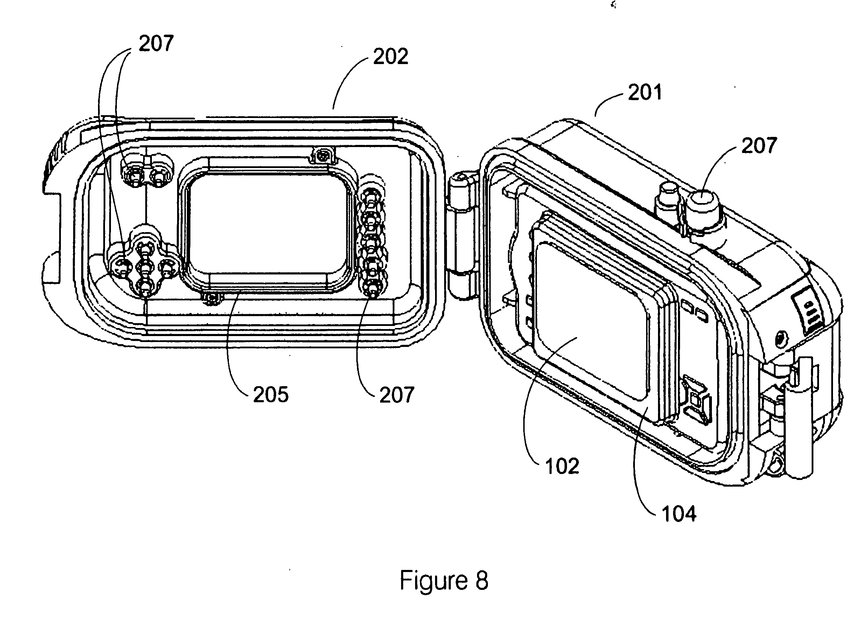

Encased camera 50 is usable with aforementioned protections (against sand, dirt, scratching, moisture and like traumas) in a wide range of environments (e.g. in rough terrain or shallow water). For diving to greater depths with encased camera 50, there is provided rugged housing 200, as seen in FIGS. 7 and 8. Housing is made of two shells or portions 201 (front) and 202 (back), hinged on one side and clampable tightly by conventional buckle-type clamping fasteners at the other side. Each shell 201 and 202 can be formed as a molded product of synthetic resin (e.g. polycarbonate) or other synthetic material that is impermeable to water and resistant to pressure. Conventional O-ring or other sealing mechanisms are provided with shells 201 and 202 so as to define a water-free space for encased camera 50 when shells 201 and 202 are clamped closed.

Shell 201 has lens port 204 to accommodate lens port 101 of encased camera 50. Lens port 204 has an interior (of housing 200), inwardly and slightly opening cylindrical, semi-rigid plastic cowl or hood 203, as seen in FIG. 7. Hood 203 gently guides and accepts lens port 101 of encased camera 50 when front and back shells 201 and 202 are clamped closed. Hood 203 is dark to block light from camera flash unit 54 traveling through/along shell 201 of housing 200 if housing 200 is translucent or transparent, again to prevent adverse effects of such light on the proper intake of light into camera front lens 52. Hood 203 also assists in the moisture-sealing about lens port 101 when encased camera 50 is within clamped housing 200, by providing a plastic, sealing cushion for lens port 101 to abut against.

Shell 202 has an internal rectangular plastic ring or presser 205 positioned so that when encased camera 50 is placed within housing 200 and back shell 202 is clamped to front shell 201 , presser 205 presses the perimeter of grooved contour 104 for urging a water-tight fit of plate 102 relative to hole 103.

As seen in FIGS. 7 and 8, webbing 206 and other infrastructures within housing 200 snugly receive, align and hold properly encased camera 50 relative to hood 203 and lens port 204, and relative to camera function actuators 207 (explained below).

The exterior of housing 200 has heavy-duty corner bumpers, finger/hand gripping surfaces for the ease of the diver, and other conventional members (not shown for simplicity of presentation in the drawings).

Camera function members 53 which are a depressible button have a corresponding actuator button 207 fitted on housing 200, conventionally spring-loaded and sealed against water intrusion, and perhaps ergonomically advantageous (e.g. oversized) for use by a diver underwater.

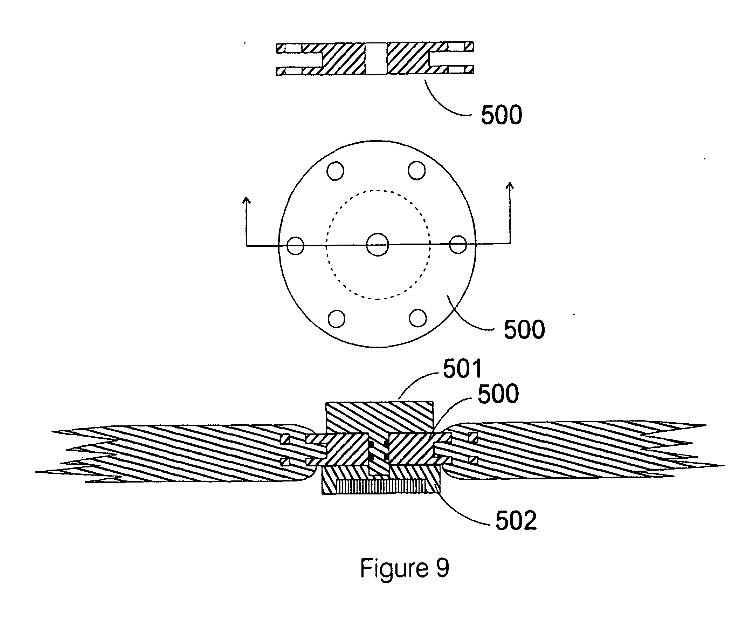

Camera function members 53 which are rotatable (e.g. dial) are rotated by the diver with following actuator. As seen in FIG. 9 (but not shown in the other drawings of skin 100 for simplicity of presentation), spacer 500 is lodged within skin 100, and rotatably houses a combination of external turning wheel 501 attached to internal cap 502 that friction fits against a dial button (not shown) of encased camera 50. Wheel and cap combination 501 and 502 are made of metal, stiff rubber or similar sufficiently rigid material.

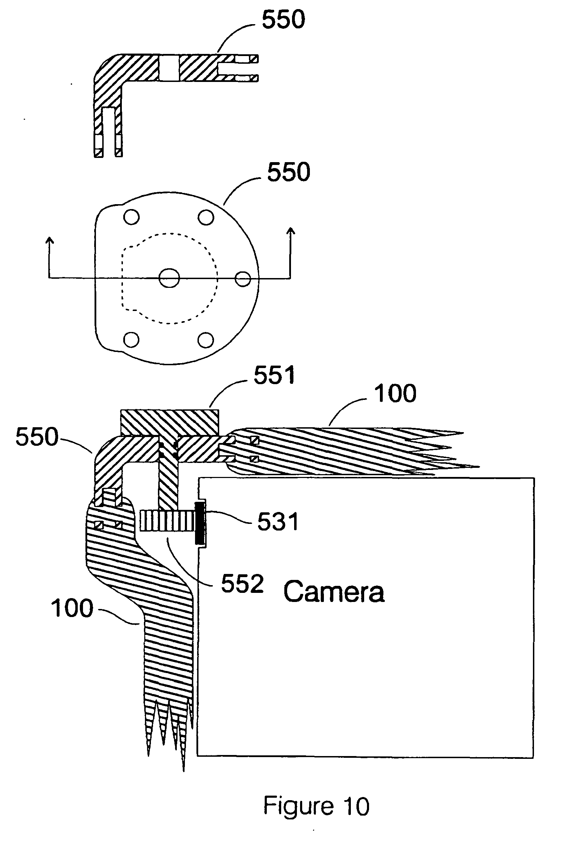

Camera function members 53 which are slidable, are slided by the diver with following actuator. As seen in FIG. 10 (but not shown in the other drawings of skin 100 for simplicity of presentation), spacer 550 is lodged at the corner of the top and side portions of skin 100 proximate a slide dial 531 of camera 50. Spacer 550 rotatably supports an external turning wheel 551 which turns a friction wheel 552 that abuts slide dial of 531 and laterally moves slide dial 531 in a pinion style interaction when wheel 551 is turned by the user.

Spacers 500 and 550 are "insert molded" into skin 100 as it itself is being molded. Spacers 500 and 550 can be made of metal or non-metallic material (such as thermoset plastic) as long as that material retains its shape (e.g. does not melt) in the temperature range that the silicon rubber is being molded. To make skin 100. The support provided by spacers 500 and 550 includes O-rings and other conventional mechanisms to resist water leakage.

Herein above, reference has been made to a "digital camera", and a typical camera in terms of "form factor" representation has been illustrated in the Figures. This invention (and in particular, the skin and the housing thereof), are customizable to a wide range of cameras. Nothing herein is meant to limit this invention to a digital camera for still shots. For example, video cameras (or those having both still picture and video functionality) are within the teachings of this invention. Furthermore, skin 100 can be adapted for a wide range of cameras where the camera function members are operated by a depression, rotation or sliding movement. There might be some limitations for a camera where a very substantial projection must be accommodated (e.g. flash unit that pops up substantially or a lever switch that swings out substantially from the camera). But in these cases, skin 100 can be adapted to have a rigid or semi- rigid structure to accommodate the projection (e.g. along the lines of skin lens port 204 for lens port 101 of camera front lens 52).

One example of aforementioned adaptation is for cameras equipped with a zoom version of front lens 51. Skin 100 lens port 204 can be adapted by equipping it with a silicon skin bellows to surround the projected front lens 51 (not shown for simplicity of illustration) and which expands from an initial rest position and contracts, in response to the projection or retraction of the zoom lens.

Plate 102 made be of glass or transparent plastic but also may be made conventionally to provide a small magnification for the ease of the diver relative to camera viewing window 51.

Without skin 100, a camera within a housing like housing 200, would suffer from condensation and consequent damage to the electronics of the camera. Skin 100 provides protection against moisture condensation within housing 200.

As explained above, a skin can be adapted for a wide range of cameras of differing contours but there might be some limitations for a camera having a substantial projection to be accommodated. One particular, substantial projection - the zoom lens of the camera - invites special attention.

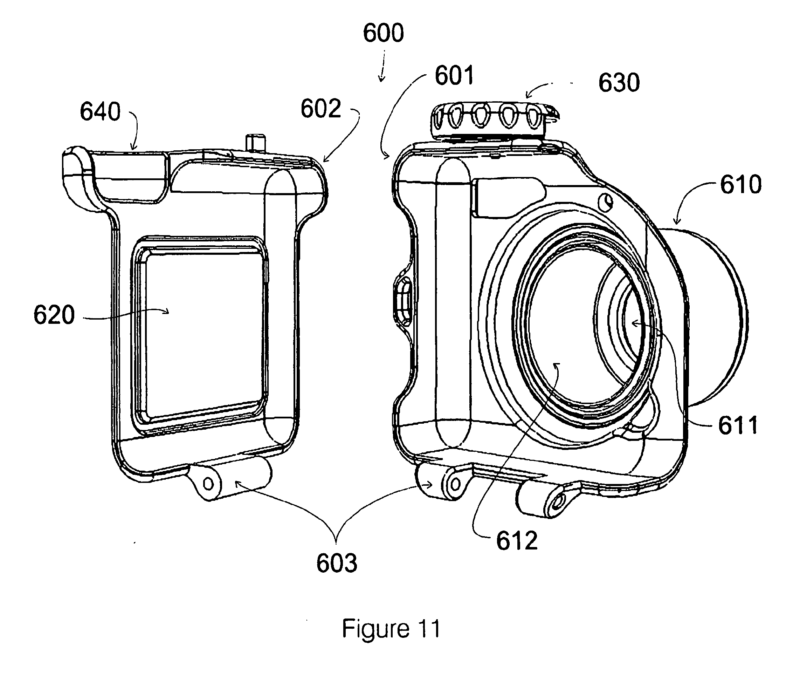

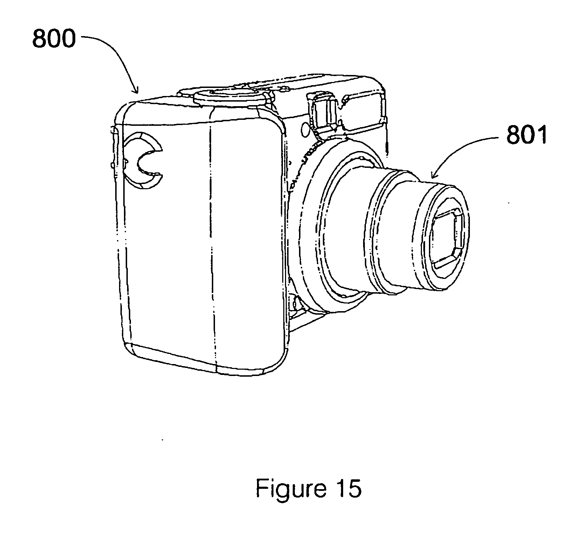

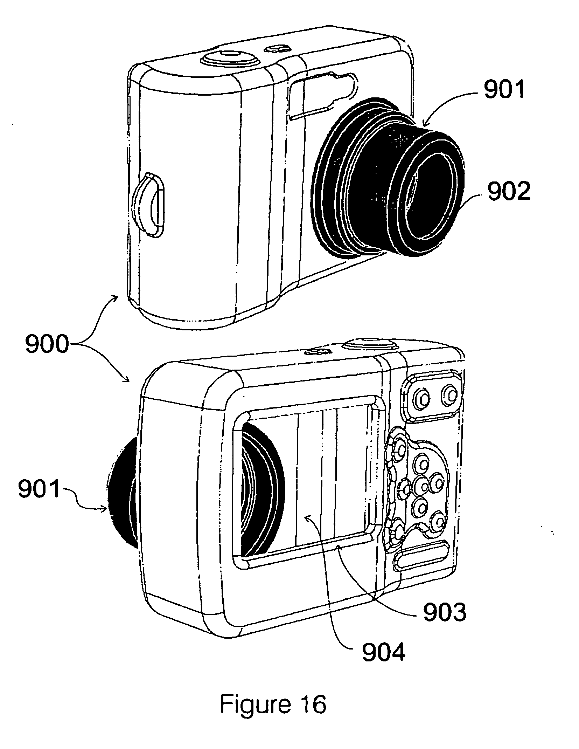

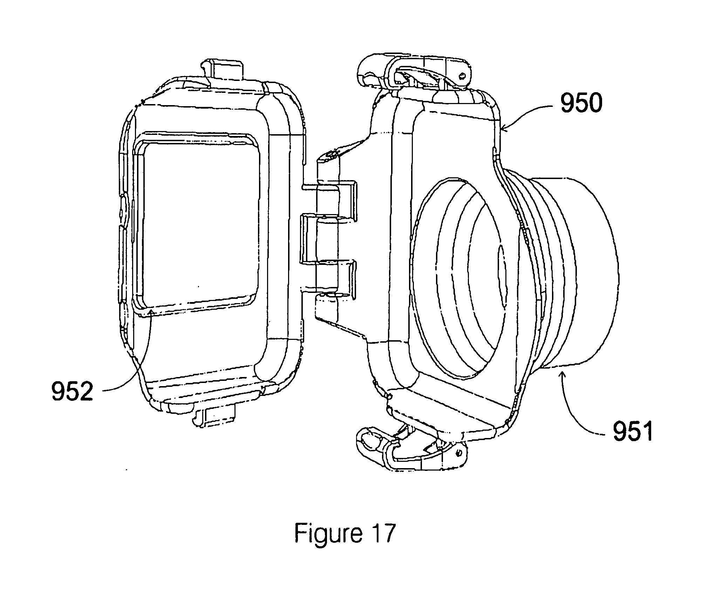

For many cameras, the skin can be adapted to have a rigid or semirigid structure to accommodate the zoom lens. Following the principles embodied in the example lens port 101 for camera 50 (shown in FIG. 1), skin 900 will be explained in conjunction with FIGS. 16-17. But for some cameras whose zoom lens is very large or shaped unusually, the requisite adaptation of the skin may be difficult or costly to manufacture. This situation is addressed by a skin explained in conjunction with FIGS. 11-15. For both of those size of cameras, a lens protector can be advantageously employed, as explained below. All cameras mentioned below differ between themselves and from camera 50 only in form factor (size, contours, actuator buttons and the like). For simplicity of illustration, not all features of such cameras will be illustrated and identified but essentially, all cameras have a lens, a viewing window or similar mechanism for the user, actuator functionality (e.g. slide knobs, push buttons and the like) and optionally a flash unit.

Lens protector 600, skin 700 and associated camera 800 with large zoom lens 801 , are described in conjunction with FIGS. 11-15.

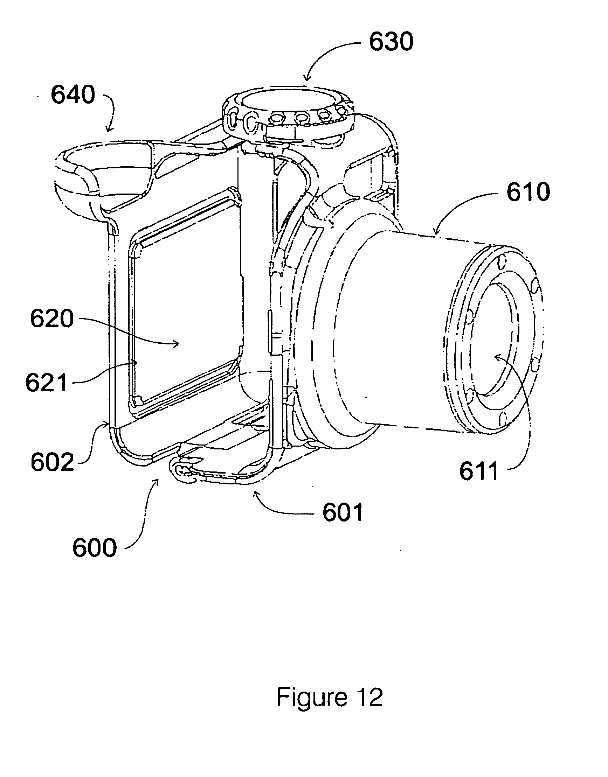

As seen in FIGS. 11 and 12, rigid lens protector 600 resembles a partial version of housing 200. Lens protector 600 is formed by front shell 601 (with lens port 610) and back shell 602, respectively corresponding roughly to the front and back of camera 800. Front and back shells 601 and 602 are hinged at the bottom by a conventional pin mechanism and are secured at the top by conventional releasably lock 630 (e.g. rotatable lock mechanism) for creating, when closed like a shell, a water-resistant seal about camera 800 encased by skin 700 (explained below).

Although lens protector 600 resembles housing 200 in form and function (e.g. rigid lens port 610 provides protection to the zoom lens 801 against mechanical traumas like knocks and scrapes), one major difference is that front and back shells 601 and 602 are contoured to snugly accept (part of) front and back portions of camera 800 encased in skin 700. In other words, there is no internal space intended between (part of) skin-encased camera 800 and the inside surface of lens protector 600. The portion of the skin-encased camera 800 that is not protected by lens protector 600, is available for gripping by the user and still enjoys protection against environmental traumas explained above. Front shell 601 is contoured with a lens port 610 to receive the zoom lens 801 of camera 800 (and resembles lens port 204 of housing 200 for camera 50 as shown in FIG. 7). Lens port 610 has tempered glass 611 to align with the camera zoom lens 801. Lens port 610 may be darkened to act as a light shield. For example, there may be internal hood 612 made of a soft, iinner lining of black thermal plastic resin, that prevents the light of a flash of camera 800, from contacting and spreading along skin 700 proximate the camera zoom lens 801 and spoiling the picture taken (whose principles were explained above in conjunction with darkened hood 203 and lens port 101 for camera 50).

Back shell 602 is contoured with a transparent plate 620 to align with viewing window (not shown) of camera 800. Actuator functions (e.g. dial knobs) and other projections of camera 800 are accommodated by lens protector 600

Details of the pin mechanism, locks, fasteners and sealing mechanisms interconnecting front and back shells 601 and 602, are not shown in detail for simplicity of illustration. As with housing 200, any conventional mechanisms known to those in the art, are acceptable (for examples, hinges, buckle fasteners, rotatable locks, O-rings) as long as front and back shells 601 and 602 close in a water-resistant seal about skin-encased camera 800. The internal contours of front and back shells 601 and 602 generally follow the external contours of skin 700 when it encases camera 800. In particular, the portion of lens protector back shell 602 about transparent plate 620, the portion of lens protector front shell 601 proximate the base of lens port 610, and the portions of skin 700 correspondingly aligned thereto when lens protector 600 is tightly closed about camera 800, are each contoured so as to create a tight water-resistant seal when lens protector 600 is tightly closed about skin-encased camera 800, in order to prevent moisture from entering aforementioned holes. In particular, back shell 602 has an internal rectangular plastic ring or presser 621 positioned so that when lens protector 600 is closed tightly about the skin- encased camera 800, presser 621 presses the perimeter of grooved contour 713 of skin hole 711 (corresponding to the viewing window of the camera) for urging a water-tight seal therebetween to prevent moisture from entering therethrough. In particular, skin 700 has a circular contour 712 surrounding hole 710 that creates a tight, water-resistant seal with a corresponding internal portion of lens protector front shell 601 (not shown) to prevent any moisture from entering hole 710.

Like housing 200, front and back shells 601 and 602 (and in particular, lens port 610) can be formed as a molded product of synthetic resin (e.g. polycarbonate) or other synthetic material that is impermeable to water and resistant to pressure.

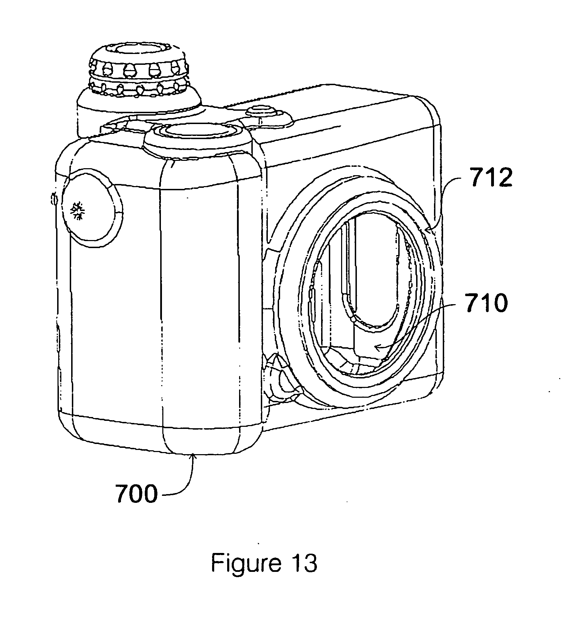

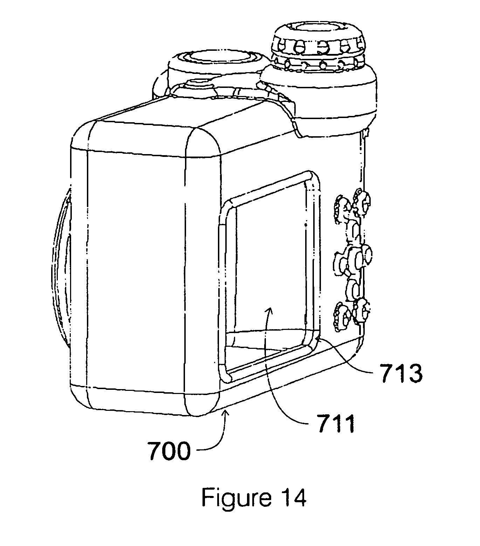

FIGS. 13 and 14 show skin 700 for camera 800. Skin 700 is another example of the "second skin" principles explained above in connection with the embodiment of skin 100 (as described in connection with FIGS. 1-6). Skin 700 is contoured to fit camera 800 of a different form factor than that shown in FIGS. 1-6 but the principles continue to apply. The major difference is that skin 700 has an opening 710 for the zoom lens 801 of camera 800 to extend through freely. Skin 700 has hole 711 profiled and aligned for the viewing window (not shown) of camera 800.

With reference to FIGS. 16-17, for a camera (not shown) whose zoom lens is not so difficult or costly to manufacture a "second skin" for, a variation is shown in lens protector 950 with clear (i.e. not darkened) lens port 951 that is a through hole for lens port 901 to extend through. Skin 900 resembles skin 100 (described above in conjunction with FIGS. 1-6) but, for accommodating the large zoom lens, has a very extended and darkened lens port 901 (resembling lens port 101 of skin 100) that terminates with tempered glass 902 in a water-tight configuration. When the encased camera is assembled with the lens protector 950, the tempered glass 902 is exposed to the environment. Lens protector 950 has an internal rectangular plastic ring or presser 952 positioned so that when lens protector 950 is closed tightly about the camera, presser 952 presses the perimeter of grooved contour 903 of skin hole 904 (corresponding to the viewing window of the camera) for urging a water-tight seal therebetween to prevent moisture from entering hole 904.

Although one particular, substantial projection - the zoom lens of the camera - has been addressed above, this teaching should not be limited thereto. The principles of mechanical protection against traumas, water-resistant seal and others described above, may be applied to other large projections extending from the camera or other underwater device.

Where used in the various figures of the drawings, the same numerals designate the same or similar parts. Furthermore, when the terms "top", "bottom", "first", "second", "inside", "outside", "edge", "side", "front", "back", "length", "width", "inner", "outer", and similar terms are used herein, it should be understood that these terms have reference only to the structure shown in the drawings as it would appear to a person viewing the drawings and are utilized only to facilitate describing the invention.

## Claims

1. A waterproof digital camera combination (50, 100), comprising:
(a) digital camera (50) with a plurality of function members (53), a rear viewing screen (51) and a front lens (52);
(b) a synthetic skin (100) that encases said camera by snugly fitting around said camera to provide a water-tight enclosure thereof and is of a thickness and elasticity to allow said function members to be operated by a user pressing the corresponding portions of said synthetic skin;
wherein said synthetic skin has a lens port (101) to accommodate said camera front lens and a transparent portion corresponding to said camera rear viewing screen; wherein said synthetic skin transparent portion of said synthetic skin has an opening and an associated cooperating transparent plate that is dimensioned and formed so that it can be repeatedly movable from an open position to a closed position on said opening and vice versa, where in said closed position, a water-tight relationship is formed by said transparent plate with the remainder of said synthetic skin and where in said open position, the dimensions of said synthetic skin opening permit the camera to be inserted therethrough and removed therethrough, so that said synthetic skin transparent portion performs the double function of permitting the user to see said camera rear viewing screen when said camera is within said synthetic skin and forming a removable opening for the insertion into said synthetic skin of said camera and for its removal therefrom; and
wherein said synthetic skin (100) is flexible enough to permit stretching thereof for the insertion of the camera (50) through said synthetic skin opening (103).

2. The combination of claim 1, wherein said synthetic skin transparent portion has a hole (103) with a grooved perimeter (104) for releasably accepting said transparent plate.

3. The combination of claim 2, wherein one of said camera function members (53) is a button operated by horizontal movement, and said synthetic skin has a member that is manipulable by the user for translating that manipulation, by a friction-fit, to said camera function button.

4. The combination of claim 3, wherein a camera function member is a rotatable dial (53).

5. The combination of claim 3, wherein a camera function member is a slide button (53).

6. The combination of claim 1, wherein the portion of said synthetic skin around said lens port is relatively dark compared to the color of the remainder of said synthetic skin to reduce reflection from flash.

7. The combination of claim 1,
wherein said synthetic skin is generally of a light color and said synthetic skin around the lens port is relatively dark.

8. The combination of claim 7, further comprising a rigid, waterproof housing (200) that accepts said digital camera encased by said synthetic skin.

9. The combination of claim 8, wherein said housing has means (207) for actuating one of said camera function members (53).

10. The combination of claim 9, wherein said actuating means is spring-loaded for depressing said one camera function member (53) through said synthetic skin (100).

11. The combination of claim 10, wherein said housing (200) comprises a front half portion and a back half portion that are hinged at one side and are releasably fastenable at the other side to create a water-tight seal.

12. The combination of claim 11, wherein said housing back half portion has a plastic ring that presses on the perimeter of said transparent plate and hole when said front and back half portions are fastened together, to ensure a water-tight fit.

13. The combination of claim 12, wherein said housing front half portion has a soft semi-rigid hood that accepts said camera lens port in a water-tight relationship.

14. The combination of claim 13, wherein said hood is dark.

15. A method for protecting a digital camera (50) having a function member (53) and a viewing screen (51) for the user, comprising the steps of (a) encasing the camera with a synthetic skin (100) to provide a water-tight enclosure thereof, wherein said synthetic skin permits a user to operate the function member by pressing the corresponding portion of said synthetic skin; and wherein said synthetic skin has a transparent portion with a transparent plate (102) and an opening that is dimensioned to permit the camera to be inserted therethrough; and (b) manipulating said camera, after inserting said camera within said synthetic skin, to thereby completely encase said camera by said synthetic skin until said synthetic skin transparent portion hole is located within said synthetic skin for visual alignment with said camera viewing screen; and wherein said synthetic skin is flexible enough to permit stretching thereof for the insertion of the camera through said synthetic skin opening.

16. The method of claim 15, wherein said transparent plate is dimensioned and formed so that it can be repeatedly movable from an open position to a closed position and vice-versa, where in said closed position, a water-tight relationship is formed by said transparent member with the remainder of said synthetic skin and where in said open position, the dimensions of said opening in said synthetic skin permits said camera to be inserted therethrough and removed therethrough, so that said synthetic skin transparent portion performs the double function of permitting the user to see said camera display when said camera is completely encased within said synthetic skin and forming a removable opening for the insertion into said synthetic skin of said camera and its removal therefrom.

## Patentansprüche

1. Wasserdichte Digitalkamera-Kombination (50, 100), umfassend:
(a) Digitalkamera (50) mit einer Mehrzahl von Funktionselementen (53), einem hinteren Betrachtungsschirm (51) und einer vorderen Linse (52);
(b) eine synthetische Haut (100), die die Kamera in einem festen Sitz rund um die Kamera einschließt, um ein wasserdichtes Gehäuse derselben zu gewährleisten, und eine Dicke sowie Elastizität aufweist, die die Bedienung der Funktionselemente durch einen Benutzer mittels Drucks auf die entsprechenden Abschnitte der synthetischen Haut ermöglicht;
wobei die synthetische Haut eine Linsenöffnung (101), um die vordere Linse der Kamera aufzunehmen, und einen transparenten Abschnitt in Entsprechung zum hinteren Betrachtungsschirm der Kamera aufweist; wobei der transparente Abschnitt der synthetischen Haut eine Öffnung und eine zugehörige, transparente Platte aufweist, die so dimensioniert und geformt ist, dass sie wiederholt auf dieser Öffnung von einer offenen Stellung in eine geschlossene Stellung und umgekehrt bewegt werden kann, wobei in der geschlossenen Stellung von der transparenten Platte eine wasserdichte Beziehung zum Rest der synthetischen Haut gebildet wird und wobei die Abmessungen der Öffnung der synthetischen Haut in der offenen Stellung der Kamera ermöglichen, durch diese hindurch eingeführt und entnommen zu werden, so dass der transparente Abschnitt der synthetischen Haut die Doppelfunktion erfüllt, den Benutzer den hinteren Betrachtungsschirm der Kamera sehen zu lassen, wenn die Kamera in der synthetischen Haut enthalten ist, und eine entfernbare Öffnung zum Einführen bzw. Entfernen der Kamera in die bzw. aus der synthetischen Haut zu bilden; und
wobei die synthetische Haut (100) ausreichend flexibel ist, um das Strecken derselben zum Einführen der Kamera (50) durch die Öffnung (103) der synthetischen Haut zu ermöglichen.

2. Kombination gemäß Anspruch 1, wobei der transparente Abschnitt der synthetischen Haut ein Loch (103) mit einem gerillten Außenumfang (104) zur trennbaren Aufnahme der transparenten Platte aufweist.

3. Kombination gemäß Anspruch 2, wobei eines der Funktionselemente (53) der Kamera eine per horizontaler Bewegung bediente Taste ist und die synthetische Haut ein Element aufweist, welches vom Benutzer so manipuliert werden kann, dass diese Manipulation reibschlüssig auf die Funktionstaste der Kamera übertragen wird.

4. Kombination gemäß Anspruch 3, wobei ein Funktionselement der Kamera ein drehbares Einstellrad (53) ist.

5. Kombination gemäß Anspruch 3, wobei ein Funktionselement der Kamera eine Schiebetaste (53) ist.

6. Kombination gemäß Anspruch 1, wobei der Abschnitt der synthetischen Haut rund um die Linsenöffnung im Vergleich zur Farbe der übrigen synthetischen Haut relativ dunkel ist, um die Reflexion durch das Blitzlicht zu verringern.

7. Kombination gemäß Anspruch 1,
wobei die synthetische Haut im allgemeinen eine helle Farbe aufweist und die synthetische Haut rund um die Linsenöffnung relativ dunkel ist.

8. Kombination gemäß Anspruch 7, die ferner ein starres, wasserdichtes Gehäuse (200) umfasst, welches die in der synthetischen Haut eingeschlossene Digitalkamera aufnimmt.

9. Kombination gemäß Anspruch 8, wobei das Gehäuse ein Mittel (207) zur Betätigung eines der Funktionselemente (53) der Kamera aufweist.

10. Kombination gemäß Anspruch 9, wobei das Betätigungsmittel federgespannt ist, um das eine Funktionselement (53) der Kamera durch die synthetische Haut (100) drücken zu können.

11. Kombination gemäß Anspruch 10, wobei das Gehäuse (200) einen vorderen Halbabschnitt und einen hinteren Halbabschnitt aufweist, die auf einer Seite mit einem Gelenk verbunden sind und auf der anderen Seite lösbar befestigt werden können, um einen wasserdichten Verschluss zu schaffen.

12. Kombination gemäß Anspruch 11, wobei der hintere Halbabschnitt des Gehäuses einen Kunststoffring aufweist, der auf den Außenumfang der transparenten Platte und des Loches drückt, wenn der vordere und der hintere Halbabschnitt aneinander befestigt werden, um einen wasserdichten Sitz zu gewährleisten.

13. Kombination gemäß Anspruch 12, wobei der vordere Halbabschnitt des Gehäuses eine weiche, halbstarre Haube aufweist, welche die Linsenöffnung der Kamera in wasserdichter Beziehung aufnimmt.

14. Kombination gemäß Anspruch 13, wobei die Haube dunkel ist.

15. Verfahren zum Schutz einer Digitalkamera (50) mit einem Funktionselement (53) und einem Betrachtungsschirm (51) für den Benutzer, welches folgende Schritte umfasst: (a) Einschließen der Kamera in eine synthetische Haut (100), um ein wasserdichtes Gehäuse derselben zu gewährleisten, wobei die synthetische Haut einem Benutzer die Bedienung des Funktionselements durch Drücken des entsprechenden Abschnitts der synthetischen Haut ermöglicht; und wobei die synthetische Haut einen transparenten Abschnitt mit einer transparenten Platte (102) und einer Öffnung aufweist, die so dimensioniert ist, dass die Kamera durch diese hindurch eingeführt werden kann; und (b) Manipulieren der Kamera nach Einführen der Kamera in die synthetische Haut, um die Kamera damit vollständig in die synthetische Haut einzuschließen, bis das Loch des transparenten Abschnitts der synthetischen Haut innerhalb der synthetischen Haut in Sichtausrichtung mit dem Betrachtungsschirm der Kamera angeordnet ist; und wobei die synthetische Haut ausreichend flexibel ist, um zum Einführen der Kamera durch die Öffnung der synthetischen Haut gestreckt werden zu können.

16. Verfahren gemäß Anspruch 15, wobei die transparente Platte so dimensioniert und geformt ist, dass sie wiederholt von einer offenen Stellung in eine geschlossene Stellung und umgekehrt bewegt werden kann, wobei in der geschlossenen Stellung von dem transparenten Element eine wasserdichte Beziehung mit dem Rest der synthetischen Haut gebildet wird und wobei in der offenen Stellung die Abmessungen der Öffnung in der synthetischen Haut das Einführen der Kamera durch dieselbe und deren Entfernen durch dieselbe erlauben, so dass der transparente Abschnitt der synthetischen Haut eine Doppelfunktion ausführt, indem er dem Benutzer die Betrachtung des Kamera-Displays erlaubt, wenn die Kamera vollkommen in die synthetische Haut eingeschlossen ist, und eine entfernbare Öffnung bildet, um die Kamera in die synthetische Haut einzuführen bzw. daraus zu entfernen.

## Revendications

1. Une combinaison d'appareil photo numérique étanche (50, 100), comprenant :
(a) appareil photo numérique (50) avec une pluralité d'éléments fonctionnels (53), un écran de visualisation arrière (51) et un objectif avant (52) ;
(b) une peau synthétique (100) qui enferme ledit appareil photo en s'ajustant parfaitement à cet appareil photo pour fournir une fermeture étanche et qui est d'une épaisseur et d'une élasticité permettant auxdits éléments fonctionnels d'être manipulés par un utilisateur en appuyant sur les parties correspondantes de ladite peau synthétique ;
Où ladite peau synthétique possède un port d'objectif (101) pour loger ledit objectif avant de l'appareil et une partie transparente correspondant à cet écran de visualisation arrière de l'appareil photo ; où ladite partie transparente de peau synthétique de ladite peau synthétique possède une ouverture et une plaque transparente coopérante associée qui est dimensionnée et formée de façon à pouvoir être déplacée de manière répétée à partir d'une position ouverte à une position fermée sur ladite ouverture et vice versa, où dans ladite position fermée, une relation d'étanchéité est formée par ladite plaque transparente avec le reste de ladite peau synthétique et où dans ladite position ouverte, les dimensions de l'ouverture de ladite peau synthétique permettent à l'appareil photo d'y être inséré et d'en être retiré, pour que la partie transparente de ladite peau synthétique réalise la double fonction de permettre à l'utilisateur de voir l'écran de visualisation arrière dudit appareil photo lorsque ledit appareil photo est à l'intérieur de la peau synthétique et de former une ouverture amovible pour l'insertion dans ladite peau synthétique dudit appareil photo et pour son retrait ; et
Où ladite peau synthétique (100) est suffisamment flexible pour permettre de se tendre pour l'insertion de l'appareil photo (50) au travers de l'ouverture de ladite peau synthétique (103).

2. La combinaison de la revendication 1, où la partie transparente de ladite peau synthétique possède un orifice (103) avec un périmètre à rainure (104) pour accepter de façon détachable ladite plaque transparente.

3. La combinaison de la revendication 2, où un desdits éléments fonctionnels de l'appareil photo (53) est un bouton opéré par un mouvement horizontal, et ladite peau synthétique possède un élément qui est manipulable par l'utilisateur pour traduire cette manipulation, par un ajustement par friction, au bouton fonctionnel dudit appareil photo.

4. La combinaison de la revendication 3, où un élément fonctionnel de l'appareil photo est un cadran giratoire (53).

5. La combinaison de la revendication 3, où un élément fonctionnel de l'appareil photo est un bouton coulissant (53).

6. La combinaison de la revendication 1, où la partie de ladite peau synthétique autour dudit port de l'objectif est relativement sombre comparée à la couleur du reste de ladite peau synthétique pour réduire la réflexion du flash.

7. La combinaison de la revendication 1,
Où ladite peau synthétique est généralement d'une couleur claire et ladite peau synthétique autour du port de l'objectif est relativement sombre.

8. La combinaison de la revendication 7, comprenant de plus un boîtier étanche et rigide (200) qui accepte ledit appareil photo numérique enfermé par ladite peau synthétique.

9. La combinaison de la revendication 8, où ledit boîtier a des moyens (207) d'actionner un des éléments fonctionnels dudit appareil photo (53).

10. La combinaison de la revendication 9, où ledit moyen d'actionnement est à ressort pour appuyer sur un élément fonctionnel dudit appareil photo (53) au travers de ladite peau synthétique (100).

11. La combinaison de la revendication 10, où ledit boîtier (200) comprend une demi-partie avant et une demi-partie arrière qui sont fixées avec des charnières sur un côté et accrochable de façon amovible sur l'autre côté pour créer un joint étanche.

12. La combinaison de la revendication 11, où la demi-partie arrière dudit boîtier possède un anneau en plastique qui appuie sur le périmètre de ladite plaque transparente et de l'orifice lorsque lesdites demi-parties avant et arrière sont fixées ensemble, pour garantir une parfaite étanchéité.

13. La combinaison de la revendication 12, où la demi-partie avant dudit boîtier possède un capuchon semi-rigide, mou qui accepte le port d'objectif dudit appareil photo dans une relation d'étanchéité.

14. La combinaison de la revendication 13, où ledit capuchon est sombre.

15. Une méthode pour protéger un appareil photo numérique (50) ayant un élément fonctionnel (53) et un écran de visualisation (51) pour l'utilisateur, comprenant les étapes de (a) renfermement de l'appareil photo numérique par une peau synthétique (100) pour fournir une fermeture étanche, où ladite peau synthétique permet à un utilisateur de faire fonctionner l'élément fonctionnel en appuyant sur la partie correspondante de ladite peau synthétique ; et où ladite peau synthétique possède une partie transparente avec une plaque transparente (102) et une ouverture qui est dimensionnée pour permettre à l'appareil photo numérique d'y être inséré ; et (b) manipulation dudit appareil photo, après insertion dudit appareil photo dans ladite peau synthétique, pour renfermer complètement ledit appareil photo avec ladite peau synthétique jusqu'à ce que l'orifice de la partie transparente de ladite peau synthétique se trouve dans la peau synthétique pour un alignement visuel avec l'écran de visualisation dudit appareil photo ; et où ladite peau synthétique est suffisamment flexible pour permettre de se tendre pour insérer l'appareil photo au travers de l'ouverture de ladite peau synthétique.

16. La méthode de la revendication 15, où ladite plaque transparente est dimensionnée et formée de façon à être amovible de manière répétée à partir d'une position ouverte à une position fermée et vice versa, où dans ladite position fermée, une relation d'étanchéité se forme par ledit élément transparent avec le reste de ladite peau synthétique et où dans ladite position ouverte, les dimensions de ladite ouverture dans ladite peau synthétique permet à ce appareil photo d'y être inséré et d'en être retiré, de sorte que la partie transparente de ladite peau synthétique réalise la double fonction de permettre à l'utilisateur de voir l'écran de l'appareil photo lorsque ledit appareil photo est complètement enfermé à l'intérieur de ladite peau synthétique et de former une ouverture amovible pour l'insertion dans ladite peau synthétique dudit appareil photo et pour son retrait.
